# EUROPÄISCHE PATENTANMELDUNG

(11) **EP 1 047 205 A2**
(43) Veröffentlichungstag der Anmeldung: **25.10.2000**
(21) Anmeldenummer: 00104045.0
(22) Anmeldetag: 26.02.2000
(51) Int. Cl.: H04B 3/32

(54) **Schaltungsanordnung mit einer Reduktionsschaltung zur Reduktion von Störlängsspannungen auf einer Zweidrahtleitung**

(30) Priorität: 23.04.1999 DE 19918512
(71) Anmelder: DaimlerChrysler AG, 70567 Stuttgart (DE)
(72) Erfinder: Rall, Bernhard, 89075 Ulm (DE)

(57) **Zusammenfassung**

Die Erfindung bezieht sich auf eine Schaltungsanordnung mit einer Reduktionsschaltung zur Reduktion von Störlängsspannungen auf einer Zweidrahtleitung, die mit symmetrischen Gegentaktsignalen beaufschlagbar ist.

Die erfindungsgemäße Schaltungsanordnung umfaßt neben der Reduktionsschaltung Detektormittel, die mit der Zweidrahtleitung verbunden sind und bei Fehlen eines Gegentaktsignals, vozugsweise auch bei hohen induzierten Störlängsspannungen jenseits eines vorgebbaren Schwellenwerts, ein Abschaltsignal erzeugen. Außerdem sind Schaltmittel vorgesehen, die bei Anliegen eines Abschaltsignals die Reduktionsschaltung abschalten.

Verwendung z.B. für CAN-Bussysteme in Kraftfahrzeugen.

## Beschreibung

Die Erfindung betrifft eine Schaltungsanordnung mit einer Reduktionsschaltung zur Reduktion von Störlängsspannungen auf einer Zweidrahtleitung, die mit symmetrischen Gegentaktsignalen beaufschlagbar ist.

Bei Zweidrahtleitungssystemen definiert man als Signalspannung die Differenz der Spannungen in den beiden Adern gegen ein Bezugspotential, wie Masse. Unter der Längsspannung der Zweidrahtleitung versteht man den arithmetischen Mittelwert der beiden Spannungen. Bei einem idealen Gegentaktsignal sind die beiden Spannungen bis auf eine Konstante vollkommen symmetrisch, so daß die Längsspannung verschwindet oder zeitlich konstant ist. Bei Übertragungssystemen, die ohne Symmetrieübertrager die Zweidrahtleitung speisen, läßt sich die Forderung zeitlicher Konstanz der Längsspannung in den Umschaltmomenten und während eines Schaltzustandes jedoch nicht genau einhalten. Überlappungsfehler und Fehlerimpulse führen zu systembedingten Längsstörspannungen, deren Größe von der verwendeten Ansteuerelektronik und der Leitungsnetzimpedanz abhängt. Diese Längsstörspannungen können derart störend auf kapazitive Fahrzeugantennen einwirken, daß teure Netzabschirmmaßnahmen oder eine Kompensation der Längsstörspannungen notwendig werden.

Aus der DE 37 44 130 A1 ist eine Schaltungsanordnung der eingangs genannten Art bekannt, bei der eine Reduktionsschaltung zur Reduktion von Störlängsspannungen in eine Zweidrahtleitung eingeschleift ist. Die Reduktionsschaltung umfaßt einen ersten und einen zweiten Spannungsteiler, die jeweils mit den beiden Adern der Zweidrahtleitung verbunden sind. Der Mittelabgriff des ersten Spannungsteilers liegt am invertierenden Eingang eines Differenzverstärkers an, während der Mittelabgriff des zweiten Spannungsteilers an den Ausgang des Differenzverstärkers angeschlossen ist. Der nicht-invertierende Eingang des Differenzverstärkers liegt auf dem Symmetriepotential, z.B. Masse, der Zweidrahtleitung. Durch diese Beschaltung wird eine Gegenkopplung erzielt, d.h. der Differenzverstärker erzeugt in den beiden Adern eine Potentialdifferenz, die der Störlängsspannung stets entgegengerichtet ist.

In manchen mit symmetrischen Gegentaktsignalen beaufschlagten Zweidrahtleitungssystemen, wie z.B. in CAN-Bussystemen von Kraftfahrzeugen, ist für den Fall eines Leitungsfehlers ein Notlaufbetrieb vorgesehen, bei dem die Nachrichtenübertragung über nur eine Ader erfolgt und somit vollkommen erdunsymmetrisch ist. Die Signalspannung entartet in diesem Fall zu einer sehr großen Längsspannung, deren Amplitude bei einem CAN-Bussystem z.B. 4V statt der im Zweidrahtbetrieb auftretenden 20mV bis 150mV beträgt. Wenn in einem solchen Übertragungssystem zur Unterdrükkung der Störlängsspannungen die oben erwähnte Schaltungsanordnung verwendet wird, so unterdrückt diese zwar im Zweidrahtbetrieb die Störlängsspannungen wirkungsvoll; im Eindrahtbetrieb jedoch wird sie das Notlauf-Nutzsignal zu unterdrücken versuchen, da dieses zu einer Längsspannung entartet ist.

In dem Fachzeitschriften-Artikel 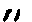 CAN - das sichere Buskonzept", Elektronik 17/1991 ist auf den Seiten 96-101 ein solcher fehlertoleranter CAN-Bus beschrieben. Insbesondere in dem Abschnitt 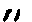 Maßnahmen zur Behandlung globaler und lokaler Busfehler" und den darauf folgenden Abschnitten ist beschrieben, wie der CAN-Treiberbaustein einen Fehler detektiert und dass bei bestimmten Fehlern auf Eindrahtbetrieb umgeschaltet werden kann. Zur Erkennung aller möglichen Einfachfehler wird als Detektormittel ein Programm eingesetzt, welches die Einstellung und Funktionsprüfung aller möglichen Übertragungsmodi erkennt. Störlängsspannungen sind in dieser Entgegenhaltung nicht thematisiert.

Es ist Aufgabe der Erfindung, eine gattungsgemäße Schaltungsanordnung anzugeben, die neben dem Zweidrahtbetrieb mit der Fähigkeit zur Reduktion von Störlängsspannungen auch einen Eindrahtbetrieb der Zweidrahtleitung ermöglicht.

Die Erfindung löst diese Aufgabe durch Bereitstellung einer Schaltungsanordnung mit den Merkmalen des Anspruchs 1. Bei dieser Schaltungsanordnung sind zusätzlich zu einer an sich bekannten Reduktionsschaltung mit der Zweidrahtleitung verbundene Detektormittel vorhanden, die bei Fehlen eines der beiden Gegentaktsignale ein Abschaltsignal erzeugen. Außerdem sind mit den Detektormitteln und der Reduktionsschaltung verbundene Schaltmittel vorgesehen, die bei Anliegen des Abschaltsignals die Reduktionsschaltung abschalten.

Vorzugsweise erzeugen die Detektormittel gemäß Anspruch 2 auch dann ein Abschaltsignal, wenn die Störlängsspannungen einen vorgebbaren Schwellenwert überschreiten. Damit wird verhindert, daß bei hohen Störlängsspannungen die Reduktionsschaltung übersteuert wird und die Datensignale unnötig verzerrt.

Auf besonders einfache Weise ist diese Schaltungsanordnung realisierbar, wenn gemäß Anspruch 3 die Detektormittel als CAN-Treiber ausgeführt sind. Solche herkömmlichen CAN-Treiber liegen bereits als fertige Einheiten vor und werden in CAN-Bussystemen dazu eingesetzt, bestimmte Klassen von Übertragungsfehlern zu erkennen und gegebenenfalls das Umschalten auf den Eindrahtbetrieb zu veranlassen. Entweder wird der CAN-Treiber zusätzlich in das System eingebracht, oder den Schaltmitteln wird das Abschaltsignal von einem ohnehin vorgesehenen CAN-Treiber zugeführt.

Eine vorteilhafte Ausgestaltung der Erfindung nach Anspruch 4 erlaubt eine wirkungsvolle Unterdrückung von Störlängsspannungen auch dann, wenn die Gegentaktsignale nur annähernd symmetrisch sind. Dies wird dadurch erreicht, daß bei der eingangs beschriebenen Reduktionsschaltung am nicht-invertierenden Eingang eines Differenzverstärkers nicht ein vorgegebenes Symmetriepotential, etwa Masse, sondern ein tiefpaßgefiltertes Summensignal als Referenzsignal anliegt. Damit verzichtet man zwar auf die Reduktion tieffrequenter Anteile der Störlängsspannung, die Reduktion der die Nachrichtenübertragung besonders beeinträchtigenden hochfrequenten Anteile wird durch diese Maßnahme jedoch deutlich verbessert.

Vorteilhafte Ausführungsbeispiele der Erfindung sind in den Zeichnungen dargestellt und werden nachfolgend beschrieben. Es zeigen:
- Fig. 1: ein Blockschaltbild einer erfindungsgemäßen Schaltungsanordnung und
- Fig. 2: eine verbesserte Reduktionsschaltung zur Verwendung in einer Schaltungsanordnung nach Fig. 1.

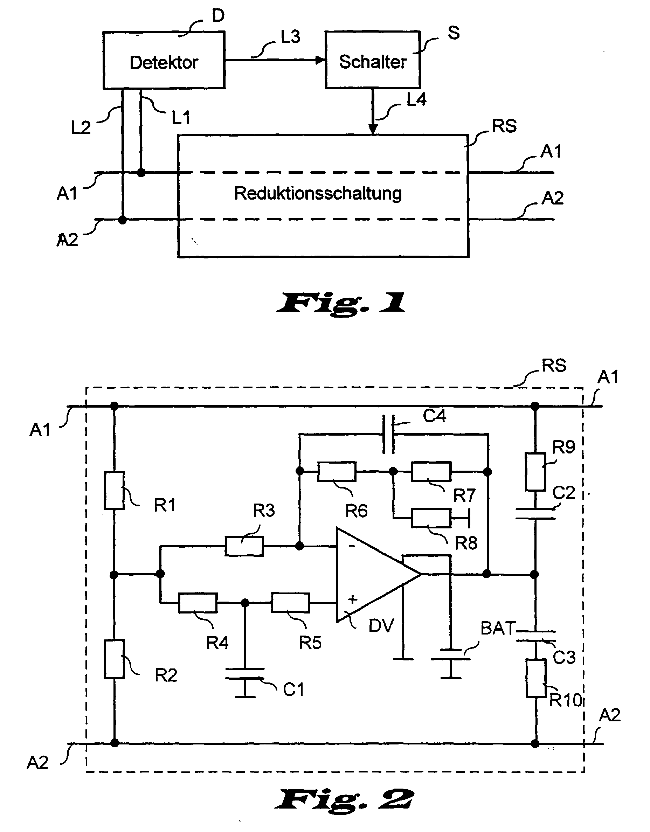

Fig. 1 zeigt eine Zweidrahtleitung mit zwei Adern A1 und A2, über die Nachrichten in Form von symmetrischen Gegentaktsignalen übertragen werden, d.h. die an den Adern anliegenden Spannungen haben im Idealfall gleiche Beträge, aber unterschiedliche Vorzeichen. In die Zweidrahtleitung ist eine Reduktionsschaltung RS eingeschleift. Über Leitungen L1 und L2 ist ein Detektor D an die Adern A1 bzw. A2 angeschlossen, der die Aufgabe hat, das Fehlen eines Gegentaktsignals in genau einer der Adern A1 oder A2 zu erkennen. Ist dies der Fall, so steht fest, daß die eine Ader einen Leitungsfehler hat und die Nachrichtenübertragung über die andere Ader im Eindraht-Notlaufbetrieb erfolgt. Ein Fehlen eines Gegentaktsignals in diesem Sinne kann auch dann angenommen werden, wenn in einer Ader die mittlere Signalamplitude einen vorgebbaren Schwellwert unterschreitet. Das Umschalten vom Zweidraht- auf den Eindrahtbetrieb wird von in Fig. 1 nicht dargestellten Treibern oder Schaltern bewirkt, wenn ein Übertragungsfehler einer bestimmten Fehlerklasse aufgetreten ist, wie Z.B. eine Leitungsunterbrechung oder ein Kurzschluß gegen Masse oder gegen die Spannungsversorgung oder gegen die andere Ader.

Vorzugsweise erzeugen die Detektormittel auch dann ein Abschaltsignal, wenn die Störlängsspannungen einen vorgebbaren Schwellenwert überschreiten. Damit wird verhindert, daß bei hohen Störlängsspannungen die Reduktionsschaltung übersteuert wird und die Datensignale unnötig verzerrt.

Vor allem, wenn die Schaltungsanordnung Bestandteil eines CAN-Bussystems ist, kann der Detektor D vorteilhaft als CAN-Treiber ausgeführt sein, der über eine Fehlererkennungseinrichtung verfügt. Derartige CAN-Treiber sind dem Fachmann bekannt und werden deswegen hier nicht näher erläutert. Wenn der Detektor D feststellt, daß auf einer der beiden Adern A1 oder A2 das Gegentaktsignal fehlt, so erzeugt er ein entsprechendes Abschaltsignal, das über eine Leitung L3 einem Schalter S zugeführt wird. Bei Anliegen dieses Abschaltsignals schaltet der Schalter S die Reduktionsschaltung RS über eine Leitung L4 ab. Dies kann etwa dadurch erfolgen, daß die Reduktionsschaltung von einer zu ihrem Betrieb erforderlichen Betriebsspannungsquelle getrennt wird. Im abgeschalteten Zustand erfolgt keine Reduktion von Störlängsspannungen; außerdem soll die Reduktionsschaltung im abgeschalteten Zustand für die im Eindrahtbetrieb übertragenen Signale transparent sein, so daß der Eindrahtbetrieb nicht durch die Reduktionsschaltung gestört wird.

Fig. 2 zeigt eine verbesserte Reduktionsschaltung RS, die alternativ zu einer herkömmlichen Reduktionsschaltung vorteilhaft in der Schaltungsanordnung von Fig. 1. einsetzbar ist. Zwischen den Adern A1 und A2 ist durch Widerstände R1 und R2 ein symmetrischer Spannungsteiler gebildet. Der Mittelabgriff dieses Spannungsteilers ist direkt oder über einen Widerstand R3 dem invertierenden Eingang eines Differenzverstärkers DV zugeführt. Parallel dazu ist der Mittelabgriff des Spannungsteilers über einen Tiefpaß, der einen Widerstand R4 und einen Kondensator C1 umfaßt, sowie einen weiteren Widerstand R5 mit dem nicht-invertierenden Eingang des Differenzverstärkers DV verbunden. Die am nicht-invertierenden Eingang anliegende Referenzspannung ist somit im Gegensatz zur bekannten Reduktionsschaltung kein fest vorgegebenes Symmetriepotential, z.B. Masse, sondern wird aus der Summe der Gegentaktsignale durch Tiefpaßfilterung bestimmt. Dies kommt einem Verzicht auf die Reduktion tieffrequenter Anteile der Störlängsspannung gleich; die Reduktion der die Nachrichtenübertragung besonders beeinträchtigenden hochfrequenten Vorteile wird durch diese Maßnahme jedoch deutlich verbessert.

Der Ausgang des Differenzverstärkers DV ist über identische Reihenschaltungen von Kondensatoren und Widerständen C2 und R₉ bzw. C3 und R₁₀ mit den Adern A1 und A2 verbunden. Anstelle dieser Reihenschaltungen können auch andere Schaltgruppen verwendet werden, um die Reduktionsschaltung RS an die Eigenschaften der jeweils verwendeten Zweidrahtleitung anzupassen. Das Funktionsprinzip der verbesserten Reduktionsschaltung RS entspricht, abgesehen von der Festlegung der Referenzspannung am nichtinvertierenden Eingang, demjenigen der eingangs zitierten bekannten Reduktionsschaltung. Auch hier werden also nach dem Prinzip der Gegenkopplung die Adern A1 und A2 der Zweidrahtleitung mit Spannungen beaufschlagt, die zu einer Reduktion von Störlängsspannungen führen.

Zur Stabilisierung des Arbeitspunktes sind zwischen dem invertierenden Eingang des Differenzverstärkers DV und dessen Ausgang hochohmige Widerstände R6 und R7 geschaltet. Parallel dazu kann zusätzlich ein Kondensator C4 vorgesehen sein, der hochfrequente Schwingungen unterdrückt. Ein weiterer Widerstand R8 verschiebt den Arbeitspunkt des Differenzverstärkerausganges auf den gewünschten Spannungswert.

Um die Reduktionsschaltung RS auszuschalten, kann der Schalter S aus Fig. 1 beispielsweise den Differenzverstärker DV über ein Relais oder eine Transistorschaltung von einer ihm zugeordneten Spannungsversorgung BAT trennen.

Die 5 V Betriebsspannung der CAN-Treiber und der 5V-Signalpegel der CAN-Signale erschwert den Betrieb eines schnellen Regelverstärkers, dem so nur 2V bis 3V Signalhub verbleiben. Die Verwendung einer Batteriespannung von 13,7V läßt einen Signalhub von mehr als 10V zu mit dem Vorteil höherer Geschwindigkeit und geringerer Netzbelastung durch hochohmige Widerstände R₉ und R₁₀.

## Patentansprüche

1. Schaltungsanordnung mit einer Reduktionsschaltung (RS) zur Reduktion von Störlängsspannungen auf einer Zweidrahtleitung (A1, A2), die mit symmetrischen Gegentaktsignalen beaufschlagbar ist, **dadurch gekennzeichnet**, **daß**
die Schaltungsanordnung ferner umfaßt:
- mit der Zweidrahtleitung verbundene Detektormittel (D), die bei Fehlen eines der beiden Gegentaktsignale ein Abschaltsignal erzeugen, und
- mit den Detektormitteln und der Reduktionsschaltung verbundene Schaltmittel (S), die bei Anliegen des Abschaltsignals die Reduktionsschaltung abschalten.

2. Schaltungsanordnung nach Anspruch 1,
**dadurch gekennzeichnet**, **daß**
die Detektormittel ein Abschaltsignal auch dann erzeugen, wenn die Störlängsspannung einen vorgebbaren Schwellenwert überschreitet.

3. Schaltungsanordnung nach Anspruch 1 oder 2,
**dadurch gekennzeichnet**, **daß**
sie in einem CAN-Bussystem eingesetzt ist und die Detektormittel als CAN-Treiber mit Fehlererkennung ausgeführt sind.

4. Schaltungsanordnung nach einem der vorhergehenden Ansprüche,
**dadurch gekennzeichnet**, **daß**
die Reduktionsschaltung umfaßt:
- einen zwischen den Adern (A1, A2) der Zweidrahtleitung geschleiften Spannungsteiler (R1, R2) und
- einen Differenzverstärker (DV), dessen invertierender Eingang mit dem Mittelabgriff des Spannungsteilers verbunden ist, dessen nicht-invertierender Eingang über einen Tiefpaß (R4, C1) mit dem Mittelabgriff des Spannungsteilers verbunden ist und dessen Ausgang mit den beiden Adern der Zweidrahtleitung verbunden ist.

5. Schaltungsanordnung nach Anspruch 4,
**dadurch gekennzeichnet**, **daß**
daß der Ausgang des Differenzverstärkers mit den Adern (A1, A2) der Zweidrahtleitung jeweils über Reihenschaltungen (C2, R₉; C₃, R₁₀) aus Kondensatoren und Widerständen verbunden ist.

6. Schaltungsanordnung nach Anspruch 4 oder 5,
**dadurch gekennzeichnet**, **daß**
zwischen dem nicht-invertierenden Eingang des Differenzverstärkers und dem Ausgang des Differenzverstärkers ein Kondensator (C4) geschaltet ist.

7. Schaltungsanordnung nach einem der Ansprüche 4 bis 6,
**dadurch gekennzeichnet**, **daß**
zwischen dem nicht-invertierenden Eingang des Differenzverstärkers und dem Ausgang des Differenzverstärkers wenigstens ein Widerstand (R6, R7) geschaltet ist.

8. Schaltungsanordnung nach Anspruch 6,
**dadurch gekennzeichnet**, **daß**
am Differenzverstärker die volle Batteriespannung anliegt und der Differenzverstärker so beschaltet ist, daß sein Gleichstromarbeitspunkt in die Mitte des Aussteuerspielraums liegt.
